# EUROPEAN PATENT APPLICATION

(11) **EP 4 525 392 A1**
(43) Date of publication of application: **19.03.2025**
(21) Application number: 23822694.8
(22) Date of filing: 09.03.2023
(51) Int. Cl.: H04L 43/0823

(54) **NETWORK LINK FAULT DIAGNOSIS METHOD AND APPARATUS**

(30) Priority: 17.06.2022 CN 202210690948; 28.09.2022 CN 202211192269
(71) Applicant: Huawei Cloud Computing Technologies Co., Ltd., Guiyang, Guizhou 550025 (CN)
(72) Inventor: ZHOU, Yanchun, Guiyang, Guizhou 550025 (CN); QIN, Yonggang, Guiyang, Guizhou 550025 (CN); LIN, Yanqing, Guiyang, Guizhou 550025 (CN); LIU, Jiahe, Guiyang, Guizhou 550025 (CN)
(74) Representative: Isarpatent
(86) International application number: PCT/CN2023/080443
(87) International publication number: WO 2023/241122

(57) **Abstract**

Embodiments of this application disclose a network link fault diagnosis method, to improve a network link fault diagnosis effect. The method in embodiments of this application includes: A cloud server generates a dialing test task based on dialing test information configured by a user, where the dialing test information includes a source internet protocol IP address and a destination IP address, and the cloud server runs the dialing test task, and displays a dialing test result, where the dialing test result includes at least one network path, the network path includes a device between a device corresponding to the source IP address and a device corresponding to the destination IP address, and the at least one network path includes at least one of the following: a virtual network path and a physical network path.

## Description

This application claims priority to Chinese Patent Application No. 202211192269.5, filed with the China National Intellectual Property Administration on September 28, 2022 and entitled "NETWORK LINK FAULT DIAGNOSIS METHOD AND APPARATUS", which is incorporated herein by reference in its entirety.

This application claims priority to Chinese Patent Application No. 202210690948.9, filed with the China National Intellectual Property Administration on June 17, 2022 and entitled "NETWORK LINK FAULT DIAGNOSIS METHOD, APPARATUS, AND DEVICE", which is incorporated herein by reference in its entirety.

### TECHNICAL FIELD

Embodiments of this application relate to the computer field, and in particular, to a network link fault diagnosis method and apparatus.

### BACKGROUND

With the rapid development of cloud computing, many enterprises migrate their services to a cloud platform, making a virtual network increasingly complex. Providers of cloud services provide various virtual network verification tools to assist operation and maintenance personnel of network links in verifying a virtual network configured by a tenant.

Currently, virtual network path analysis provided by most cloud vendors is virtual network configuration-based static analysis. Therefore, a network link check result obtained through network configuration-based static analysis cannot be used to monitor packet loss of a physical network, and the operation and maintenance personnel of the network links cannot learn of specific real traffic directions of the network links. As a result, a network link fault diagnosis effect is poor.

### SUMMARY

Embodiments of this application provide a network link fault diagnosis method and apparatus, to improve a network link fault diagnosis effect.

A first aspect of embodiments of this application provides a network link fault diagnosis method. The method may be performed by a cloud server, or may be performed by a component of the cloud server, for example, a processor, a chip, or a chip system of the cloud server, or may be implemented by a logical module or software that can implement all or some functions of the cloud server. An example in which the method is performed by the cloud server is used as an example. The fault diagnosis method in the first aspect includes: The cloud server generates a dialing test task based on dialing test information configured by a user, where the dialing test information includes a source internet protocol IP address and a destination IP address. The cloud server runs the dialing test task, and displays a dialing test result, where the dialing test result includes at least one network path and information such as a packet traffic direction in the network path, the network path includes a device between a device corresponding to the source IP address and a device corresponding to the destination IP address, and the at least one network path includes at least one of the following: a virtual network path and a physical network path.

In embodiments of this application, the cloud server runs the dialing test task to perform network fault diagnosis on a link from the source IP address to the destination IP address. In addition, the cloud server displays the dialing test result of the virtual network path and the physical network path of a network link to the user on a management window, where the dialing test result includes information such as a real traffic direction of the network path. This improves a network link fault diagnosis effect, simplifies operation and maintenance for operation and maintenance personnel, and improves network link fault diagnosis efficiency.

In a possible implementation, the dialing test information further includes one or more of the following: a source port, a destination port, and a transport protocol. The dialing test information further includes a dialing test rate and a dialing test quantity. The dialing test rate is a frequency of sending a dialing test packet, and the dialing test quantity is a quantity of sent dialing test packets. Specifically, on a management window, the user configures the dialing test information, and creates the dialing test task.

In embodiments of this application, the cloud server generates the dialing test task based on one or more types of dialing test information, to improve implementability of creating the dialing test task.

In a possible implementation, the cloud server provides a management window, where the management window is configured to display a transmission path of a network link, and the transmission path includes a control plane path, a virtual network path, and a physical network path. The cloud server executes the dialing test task based on the network link to obtain a dialing test result of a network node between the source IP address and the destination IP address. The dialing test result of the path node is displayed in the transmission path on the management window.

In embodiments of this application, the cloud server displays a dialing test result of the control plane path, the virtual network path, and the physical network path of the network link to the user on the management window, to reduce an operation and maintenance difficulty for operation and maintenance personnel, and improve network link fault diagnosis efficiency.

In a possible implementation, the cloud server obtains static resource information of a network link, where the static resource information includes one or more of the following information: a tenant virtual private cloud VPC, a subnet, a security group, a routing table, port information, an IP address, and load balancing information. The cloud server establishes a control plane path of the network link based on the static resource information. Specifically, the cloud server obtains the static resource information of the network link between the source IP address and the destination IP address, and establishes the control plane path between the source IP address and the destination IP address based on the static network resource information.

In embodiments of this application, the cloud server can establish the control plane path of the network link based on the static resource information of the network link, to improve implementability of establishing the control plane path.

In a possible implementation, a mapping relationship, namely, a second mapping relationship, exists between a device included in the virtual network path and a device included in the physical network path. A first mapping relationship exists between the device included in the virtual network path and a device included in the control plane path. The cloud server maps the control plane path to the virtual network path based on the first mapping relationship, where the first mapping relationship includes a mapping relationship between a control plane path node and a virtual network path node. The cloud server displays the first mapping relationship on the management window. The cloud server maps the virtual network path to the physical network path based on the second mapping relationship, where the second mapping relationship includes a mapping relationship between the virtual network path node and a physical network path node. The cloud server displays the second mapping relationship on the management window.

In embodiments of this application, the cloud server displays the mapping relationship between the control plane path node and the virtual network path node and the mapping relationship between the virtual network path node and the physical network path node on the management window, to assist operation and maintenance personnel in performing network link fault analysis, thereby improving network link fault diagnosis efficiency.

In a possible implementation, the cloud server prompts a fault location based on the network path. Specifically, the cloud server can display a location of a fault source in the network path on the management window. The network path includes a control plane path, a virtual network path, and a physical network path.

In embodiments of this application, the cloud server prompts the fault location of the network path on the management window, to assist operation and maintenance personnel in performing network link fault analysis, thereby improving network link fault diagnosis efficiency.

In a possible implementation, the cloud server provides at least one troubleshooting suggestion. When the dialing test result indicates that the network link is faulty, the cloud server marks an abnormal dialing test result on the management window, and prompts fault information. The fault information is, for example, a quantity of network link faults and fault details. The fault details include a fault location and a troubleshooting suggestion. After generating a network fault diagnosis result and the fault information based on the dialing test result, the cloud server displays the network fault diagnosis result and the network fault information on the management window.

In embodiments of this application, the cloud server can determine the troubleshooting suggestion based on the dialing test result, to improve network link fault diagnosis efficiency.

In a possible implementation, the virtual network path includes a virtual device between the device corresponding to the source IP address and the device corresponding to the destination IP address, and the physical network path includes a physical device between the device corresponding to the source IP address and the device corresponding to the destination IP address. The cloud server displays the virtual device in the virtual network path and the physical device in the physical network path on the management window.

In embodiments of this application, the cloud server displays the virtual device in the virtual network path and the physical device in the physical network path to the user on the management window, to improve network link fault diagnosis efficiency of operation and maintenance personnel.

In a possible implementation, the dialing test result further includes a packet loss rate or a delay of one or more devices. The cloud server displays the dialing test result on the management window.

In embodiments of this application, the cloud server displays the dialing test result on the management window, to improve network link fault diagnosis efficiency.

In a possible implementation, a transmission path corresponding to one or more network services exists between the source IP address and the destination IP address, and the cloud server can implement a dialing test on multiple network services based on the dialing test task.

In embodiments of this application, the cloud server obtains a traffic path of any service based on static network path analysis, to implement the dialing test on the multiple network services, thereby improving network link fault diagnosis efficiency.

In a possible implementation, in a process in which the cloud server executes the dialing test task based on the network link to obtain a dialing test result of a path node, the cloud server sends the dialing test task to a start node. The dialing test task indicates the start node to generate a dialing test packet and transmit the dialing test packet to a destination node. The start node is a path node corresponding to the source IP address, and the destination node is a path node corresponding to the destination IP address. The cloud server obtains a mirrored packet of each path node between the start node and the destination node, where the mirrored packet is a mirror of the dialing test packet. The cloud server analyzes the dialing test result of the path node based on the mirrored packet.

In embodiments of this application, the cloud server executes the dialing test task based on a real dialing test packet, to detect reachability of the network path. A traffic type does not need to be sensed during a network path dialing test that is based on the real dialing test packet, so that dialing test traffic is decoupled from a service traffic type, thereby improving network link fault diagnosis efficiency.

In a possible implementation, the dialing test packet includes a dialing test task identifier ID and a differentiated services code point DSCP. In a process in which the cloud server obtains the mirrored packet of each path node between the start node and the destination node, the cloud server identifies a dialing test packet of each path node between the start node and the destination node based on the dialing test task ID and the DSCP. The cloud server generates a mirrored packet based on the identified dialing test packet.

In embodiments of this application, a real dialing test packet is put in the start node of the network path, packet matching is performed through color marking, and a matched mirrored packet is reported to a fault diagnosis module to detect which network nodes that the dialing test packet passes through, to verify reachability of the network path. Packet matching is performed through color marking, so that implementability of generating the mirrored packet is improved.

A second aspect of embodiments of this application provides a network link fault diagnosis apparatus, including a transceiver unit and a processing unit. The processing unit is configured to generate a dialing test task based on dialing test information configured by a user, where the dialing test information includes a source internet protocol IP address and a destination IP address. The processing unit is further configured to: run the dialing test task, and display a dialing test result, where the dialing test result includes at least one network path, the network path includes a device between a device corresponding to the source IP address and a device corresponding to the destination IP address, and the at least one network path includes at least one of the following: a virtual network path and a physical network path.

In a possible implementation, the dialing test information further includes one or more of the following: a source port, a destination port, and a transport protocol.

In a possible implementation, a mapping relationship exists between a device included in the virtual network path and a device included in the physical network path.

In a possible implementation, the processing unit is further configured to prompt a fault location based on the network path.

In a possible implementation, the processing unit is further configured to provide at least one troubleshooting suggestion.

In a possible implementation, the virtual network path includes a virtual device between the device corresponding to the source IP address and the device corresponding to the destination IP address, and the physical network path includes a physical device between the device corresponding to the source IP address and the device corresponding to the destination IP address.

In a possible implementation, the dialing test result further includes a packet loss rate or a delay of one or more devices.

In a possible implementation, the transceiver unit is configured to obtain static resource information of a network link, where the static resource information includes one or more of the following information: a tenant virtual private cloud VPC, a subnet, a security group, a routing table, port information, an IP address, and load balancing information. The processing unit is further configured to establish a control plane path of the network link based on the static resource information.

A third aspect of embodiments of this application provides a computer device cluster, including at least one computing device. Each computing device includes a processor, and the processor of the at least one computing device is configured to execute instructions stored in a memory of the at least one computing device, so that the computing device cluster performs the method according to any one of the first aspect or the possible implementations of the first aspect.

A fourth aspect of embodiments of this application provides a computer-readable storage medium. The computer-readable storage medium stores instructions, and when the instructions are executed, a computer is enabled to perform the method according to any one of the first aspect or the possible implementations of the first aspect.

A fifth aspect of embodiments of this application provides a computer program product. The computer program product includes instructions, and when the instructions are executed, a computer is enabled to implement the method according to any one of the first aspect or the possible implementations of the first aspect.

It may be understood that, for beneficial effects that can be achieved by any one of the foregoing provided computer device cluster, the foregoing provided computer-readable medium, the foregoing provided computer program product, or the like, refer to the beneficial effects in the corresponding method. Details are not described herein again.

### BRIEF DESCRIPTION OF DRAWINGS

FIG. 1 is a diagram of a system architecture of a network link fault diagnosis system according to an embodiment of this application;
FIG. 2 is a schematic flowchart of a network link fault diagnosis method according to an embodiment of this application;
FIG. 3 is a diagram of a management window according to an embodiment of this application;
FIG. 4a is a diagram of another management window according to an embodiment of this application;
FIG. 4b is a diagram of another management window according to an embodiment of this application;
FIG. 5 is a diagram of a physical network path according to an embodiment of this application;
FIG. 6a is a diagram of another management window according to an embodiment of this application;
FIG. 6b is a diagram of another management window according to an embodiment of this application;
FIG. 7 is a diagram of a structure of a network link fault diagnosis apparatus according to an embodiment of this application;
FIG. 8 is a diagram of a structure of a computer device according to an embodiment of this application;
FIG. 9 is a diagram of a structure of a computer device cluster according to an embodiment of this application; and
FIG. 10 is a diagram of a structure of another computer device cluster according to an embodiment of this application.

### DESCRIPTION OF EMBODIMENTS

Embodiments of this application provide a network link fault diagnosis method and apparatus, to improve a network link fault diagnosis effect.

In the specification, claims, and accompanying drawings of this application, the terms "first", "second", "third", "fourth", and the like (if existent) are intended to distinguish between similar objects but do not necessarily indicate a specific order or sequence. It should be understood that the data used in such a way is interchangeable in a proper circumstance, so that embodiments described herein can be implemented in an order other than the order illustrated or described herein. In addition, the terms "include" and "have" and any other variants are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

First, some terms in embodiments of this application are described, to help a person skilled in the art understand the solutions.

A dialing test is a network diagnosis manner of simulating a user to send a packet to test whether two nodes can communicate with each other, so as to verify whether a network between the two nodes on which the dialing test is performed is normal.

A full link is a comprehensive one-stop network fault demarcation and location system, which uses a topology as a core and is constructed based on three-layer mapping among a virtual network control plane, a virtual network data plane, and a physical network.

Packet coloring refers to statistics of IP packet coloring. The statistics of IP packet coloring, which is an IP network performance statistics technology, uses a method of directly marking service packets to implement accurate end-to-end/segment-based packet loss measurement for IP packets.

A control plane is used to control and manage running of all network protocols, and provide various types of network information and forwarding query entries necessary for a data plane.

An IP 5-tuple includes a source IP address, a source port, a destination IP address, a destination port, and a transport layer protocol.

A differentiated services code point is a mechanism of differentiating priorities using coded values according to a differentiated service (differentiated service, Diff-Serv) quality of service (quality of service, QoS) classification criterion by using six used bits and two unused bits in a type of service (type of service, TOS) byte of an IP header of each data packet.

A virtual network is a network formed through interconnection among virtual machines running on a single physical machine, where the interconnection among the virtual machines is to perform data sending and receiving with each other. A virtual machine may be connected to a virtual network created when a network is added.

The following describes the network link fault method and apparatus provided in embodiments of this application with reference to the accompanying drawings.

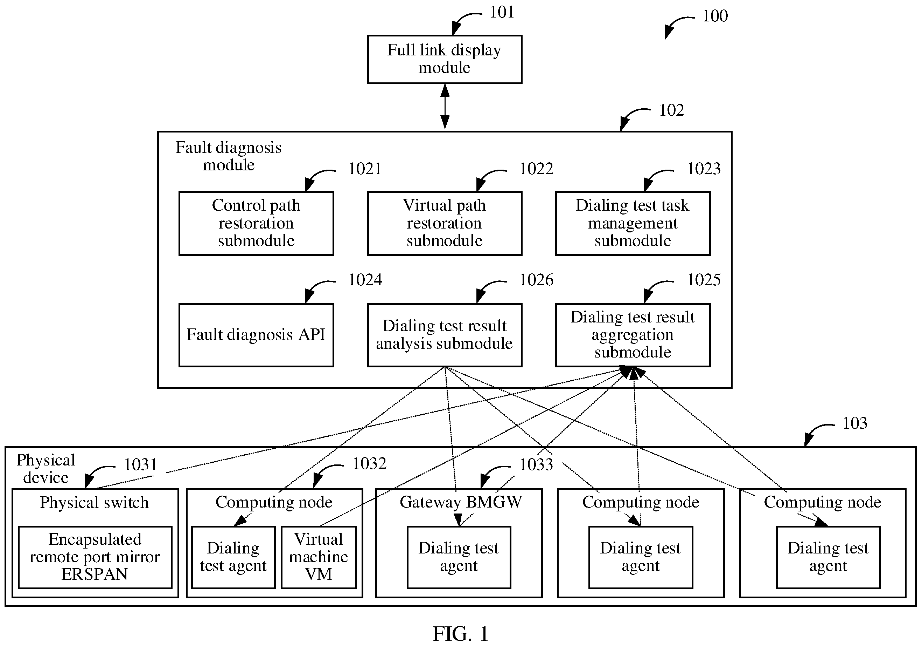

FIG. 1 is a diagram of a system architecture of a network link fault diagnosis system according to an embodiment of this application. In an example shown in FIG. 1, the network link fault diagnosis system 100 includes a full link display module 101, a fault diagnosis module 102, and a physical device 103. The fault diagnosis module 102 includes a control path restoration submodule 1021, a virtual path restoration submodule 1022, a dialing test task management submodule 1023, a fault diagnosis application programming interface API 1024, a dialing test result aggregation submodule 1025, and a dialing test result analysis submodule 1026. The physical device 103 includes one or more devices, for example, a physical switch 1031, a computing node 1032, and a gateway 1033. The following describes specific functions of each part in the network link fault diagnosis system 100 in detail.

The full link display module 101 is configured to display a three-layer network link and a network link fault diagnosis result. The three-layer network link includes a control plane path, a virtual network path, and a physical network path. The full link display module 101 is further configured to: interact with a user, and receive a network link fault diagnosis task created by the user, including receiving, through a display screen, dialing test information of a network link to be diagnosed by the user, where the dialing test information of the network link includes a source IP address and a destination IP address. In a possible implementation, the dialing test information of the network link further includes the source IP address, a source port, a destination port, and a transport layer protocol.

The fault diagnosis module 102 is configured to: generate a dialing test task based on the dialing test information entered by the user, aggregate and analyze a dialing test result of the network link to generate a fault diagnosis result, and generate a troubleshooting suggestion corresponding to the fault diagnosis result.

The control path restoration submodule 1021 is configured to: establish a control plane path of the network link based on static resource information of a tenant, and verify reachability of a data flow of the tenant in the control plane path under a static resource configuration. The virtual path restoration submodule 1022 is configured to: generate a virtual path based on the control plane path, and provide virtual path information for the dialing test task. The dialing test task management submodule 1023 is configured to: generate the dialing test task based on the dialing test information entered by the user, and send the dialing test task to a start node of a dialing test path. The fault diagnosis API 1024 is configured to provide an external application programming interface for the fault diagnosis module 102, including receiving the fault diagnosis task through the fault diagnosis API 1024 and sending the dialing test task through the fault diagnosis API 1024.

The dialing test result aggregation submodule 1025 is configured to: receive a mirrored packet reported by each physical device 103, and generate a dialing test result of each physical device 103 based on the reported mirrored packet, where the dialing test result includes related information in a forwarding physical path of a dialing test packet, for example, a packet loss rate and delay data of each physical device 103. The dialing test result aggregation submodule 1025 is further configured to add the dialing test result to the virtual path based on the mirrored packet of the physical device 103, to return a complete virtual path dialing test result.

The dialing test result analysis submodule 1026 is configured to: determine, based on the dialing test result generated by the dialing test result aggregation submodule 1025, whether a network fault exists; and if the network fault exists, send an alarm message to the full link display module 101, and generate cause analysis for the network link fault and a troubleshooting suggestion.

The physical device 103 is configured to: generate a real dialing test packet based on the dialing test task sent by the fault diagnosis module 102, and send the dialing test packet to a source node. In addition, each physical device 103 in a path for forwarding the dialing test packet from the source node to a destination node can generate a mirrored packet of the dialing test packet, and send the mirrored packet to the fault diagnosis module 102. The physical device 103 is further configured to color the dialing test packet before sending the dialing test packet to the source node, so that each physical device 103 in the forwarding path can identify the dialing test packet.

The full link display module 101 and the fault diagnosis module 102 in the network link fault diagnosis system 100 may be deployed in a computing device or a computing device cluster including a plurality of computing devices. The computing device is configured to provide a cloud service of network link fault diagnosis for the user. The computing device and the computing device cluster may also be collectively referred to as a cloud server.

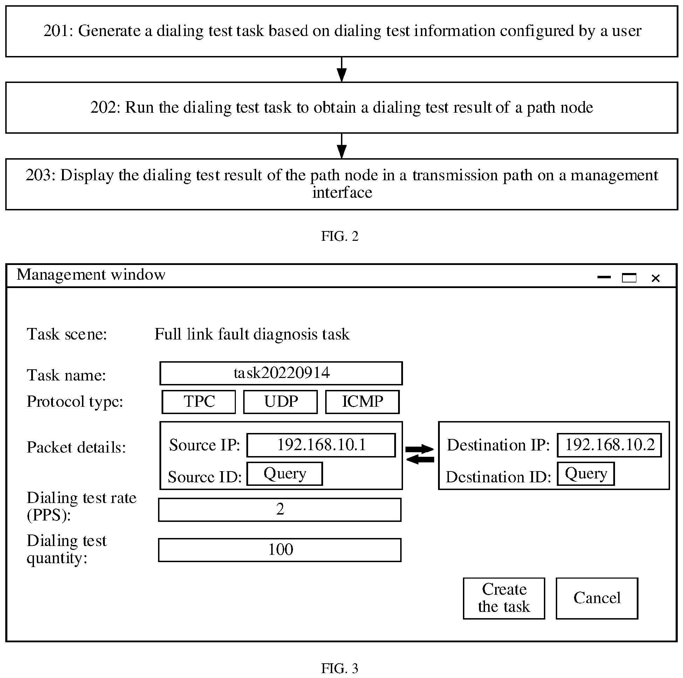

FIG. 2 is a schematic flowchart of a network link fault diagnosis method according to an embodiment of this application. As shown in FIG. 2, the fault diagnosis method provided in this embodiment of this application includes but is not limited to the following steps.

201: A cloud server generates a dialing test task based on dialing test information configured by a user.

The cloud server generates the dialing test task based on the dialing test information configured by the user, where the dialing test information includes one or more of the following information: a source IP address, a destination IP address, a source port, a destination port, and a transport protocol. Specifically, the cloud server provides a management window for the user. The user may enter the dialing test information on the management window provided by the cloud server, and create the dialing test task on the management window based on the dialing test information. After receiving a message for creating the dialing test task, the cloud server generates the dialing test task based on the dialing test information, and sends the dialing test task to a device corresponding to the source IP address.

In this embodiment of this application, a transmission path corresponding to one or more network services exists between the source IP address and the destination IP address. In other words, the cloud server can implement a traffic dialing test on any one of multiple network services. The network services are, for example, a virtual private cloud (virtual private cloud, VPC) service and an Ethernet network processor (Ethernet network processor, ENP) service.

In a possible implementation, when creating the dialing test task on the management window, the user may further set a dialing test task name, a dialing test rate, and a dialing test quantity on the management window. The dialing test rate is a quantity of pieces of data sent per second, and the dialing test quantity is a quantity of dialing test packets.

FIG. 3 is a diagram of the management window for creating the dialing test task according to this embodiment of this application. In an example shown in FIG. 3, the user may enter, on the management window, one or more types of the dialing test information, including a task name, a protocol type, packet details, the dialing test rate, and the dialing test quantity. The packet details include the source IP address, a source ID, the destination IP address, and a destination ID.

For example, the user may enter a task name of "task20220914", select a protocol type of ICMP, enter a source IP address of "192.168.10.1", enter a destination IP address of "192.168.10.2", enter a dialing test rate of "2PPS", and enter a dialing test quantity of "100" on the management window.

In this embodiment of this application, after the user enters the dialing test information and creates the dialing test task, the cloud server obtains static resource information of a network link, and establishes a control plane path of the network link based on the static resource information. Specifically, the cloud server obtains the static resource information of the network link between the source IP address and the destination IP address. The static resource information includes one or more of the following information: a tenant virtual private cloud VPC, a subnet, a security group, a routing table, port information, an IP address, and load balancing information. The cloud server establishes the control plane path between the source IP address and the destination IP address based on the static network resource information. The control plane path is a network path for control signaling transmission between a source node and a destination node.

In a possible implementation, the cloud server may establish the control plane path between the source IP address and the destination IP address based on an open-source tool Batfish. After establishing the control plane path between the source IP address and the destination IP address based on the static network resource information, the cloud server may further display the control plane path between the source IP address and the destination IP address on the management window.

After establishing the control plane path between the source IP address and the destination IP address based on the static network resource information, the cloud server maps the control plane path to a virtual network path based on a first mapping relationship. The virtual network path is a logical data transmission path established based on a network resource. The virtual network path includes one or more virtual devices between the device corresponding to the source IP address and a device corresponding to the destination IP address. The first mapping relationship includes a mapping relationship between a control plane path node and a virtual network path node. After obtaining the virtual network path, the cloud server displays the virtual network path and the first mapping relationship on the management window, where the first mapping relationship indicates that a mapping relationship exists between a device included in the control plane path and a device included in the virtual network path.

Table 1 lists the first mapping relationship provided in this embodiment of this application. As shown in Table 1, the first mapping relationship exists between the control plane path node and the virtual network path node. For example, a control plane path node "elastic cloud server" corresponds to a virtual network path node "elastic cloud server", a control plane path node "subnet" corresponds to a virtual network path node "computing node agent", and a control plane path node "virtual private cloud" corresponds to a virtual network path node "virtual router".

**Table 1**

| | |
|---|---|
| Control plane path node | Virtual network path node |
| Elastic cloud server (ECS) | Elastic cloud server (ECS) |
| Subnet (Subnet) | Computing node agent (CNA) |
| Virtual private cloud (VPC) | Virtual router (VROUTER) |

After obtaining the virtual network path between the source IP address and the destination IP address based on the first mapping relationship, the cloud server maps the virtual network path to a physical network path based on a second mapping relationship. The physical network path is a data transmission path established based on a physical device connection. The physical network path includes one or more physical devices between the device corresponding to the source IP address and the device corresponding to the destination IP address. The second mapping relationship includes a mapping relationship between the virtual network path node and a physical network path node. After obtaining the physical network path, the cloud server displays the physical network path and the second mapping relationship on the management window, where the second mapping relationship indicates that a mapping relationship exists between the device included in the virtual network path and a device included in the physical network path.

Table 2 lists the second mapping relationship provided in this embodiment of this application. As shown in Table 2, the second mapping relationship exists between the virtual network path node and the physical network path node. For example, the virtual network path node "elastic cloud server" corresponds to a physical network path node "elastic cloud server", the virtual network path node "computing node agent" corresponds to a physical network path node "computing node", and the virtual network path node "virtual router" corresponds to a physical network path node "virtual router host machine".

**Table 2**

| | |
|---|---|
| Virtual network path node | Physical network path node |
| Elastic cloud server (ECS) | Elastic cloud server (ECS) |
| Computing node agent (CNA) | Computing node agent (CNA) |
| Virtual router (VROUTER) | Virtual router (VROUTER) host machine |

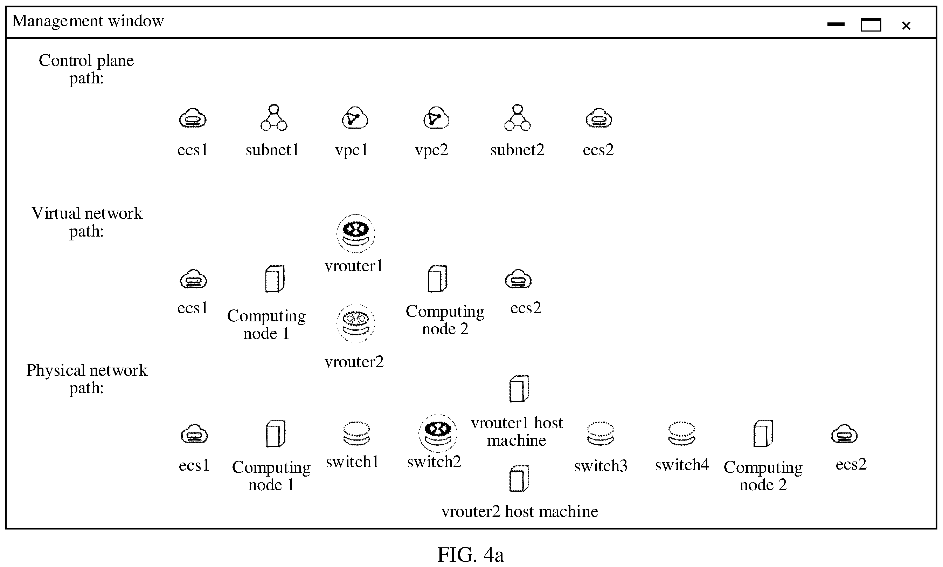

FIG. 4a is a diagram of a full link transmission path according to this embodiment of this application. In an example shown in FIG. 4a, the cloud server provides a management window. The management window can display a full link transmission path from the source IP address to the destination IP address, where the full link transmission path includes a control plane path, a virtual network path, and a physical network path.

In the example shown in FIG. 4a, the control plane path is, for example, "ecs1→subnet1→vpc1→vpc2→subnet2→ecs2", the virtual network path is, for example, "ecs1→computing node 1→vrouterl→computing node 2→ecs2", and the physical network path is, for example, "ecs1→computing node 1→switchl→switch2→vrouter1 host machine→switch3→switch4→computing node 2→ecs2".

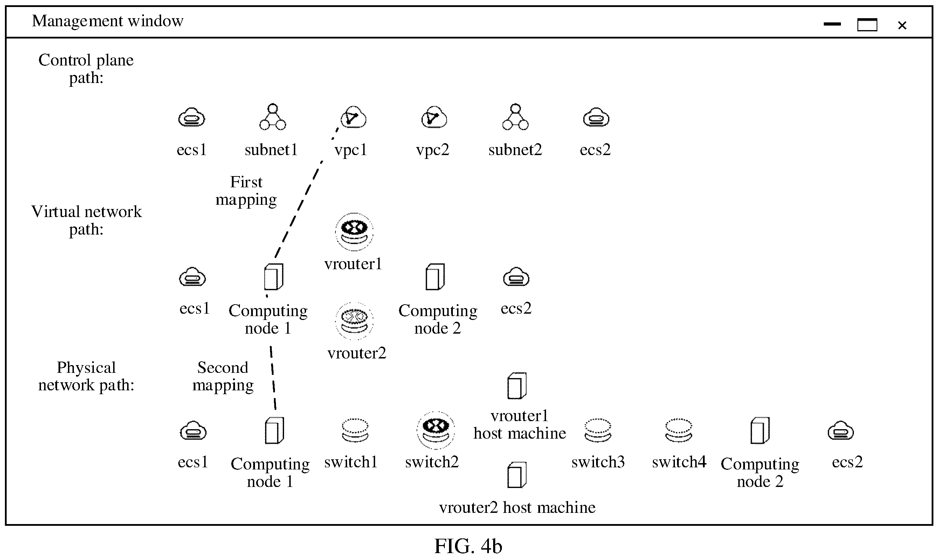

FIG. 4b is a diagram of displaying a mapping relationship between transmission paths on the management window according to this embodiment of this application. In an example shown in FIG. 4b, the management window provided by the cloud server can display a first mapping relationship between a control plane path node and a virtual network path node and a second mapping relationship between the virtual network path and the physical network path. For example, when the user clicks the control plane path node "vpc1" by using a mouse, the management window displays a mapping relationship between "vpc1" in the control plane path and the "computing node 1" in the virtual network path by using a dashed line. When the user clicks the virtual network path node " computing node 1" by using a mouse, a mapping relationship between the "computing node 1" in the virtual network path and the "computing node 1" in the physical network path is displayed by using a dashed line.

202: The cloud server runs the dialing test task to obtain a dialing test result of a path node.

After the user creates the dialing test task on the management window, the cloud server runs the dialing test task based on the network link to obtain the dialing test result of the path node. Specifically, the cloud server sends the dialing test task to a start node, the start node generates a dialing test packet and transmits the dialing test packet to a destination node. The start node is a path node corresponding to the source IP address, and the destination node is a path node corresponding to the destination IP address. The cloud server obtains a mirrored packet of each path node between the start node and the destination node, where the mirrored packet is a mirror of the dialing test packet. The cloud server analyzes the dialing test result of the path node based on the mirrored packet.

In a possible implementation, the cloud server colors the dialing test packet. Specifically, the cloud server adds a dialing test task identifier ID and a differentiated services code point DSCP to a packet header of the dialing test packet, where the dialing test task identifier ID indicates a dialing test task to which the dialing test packet belongs, and the differentiated services code point DSCP indicates a service level of the dialing test packet. In a process in which a path node in a physical network forwards the dialing test packet, the dialing test packet is identified based on the dialing test task ID and the DSCP, a mirrored packet is generated based on the identified dialing test packet, and the mirrored packet is sent to a fault diagnosis module of the cloud server.

In a process in which the cloud server analyzes the dialing test result of the path node based on the mirrored packet, after receiving the mirrored packet reported by each path node in the physical network path, the cloud server collects statistics on a packet loss rate and a delay of each path node based on the mirrored packet reported by each path node, and generates a complete traffic path of the physical network based on the mirrored packet reported by each path node.

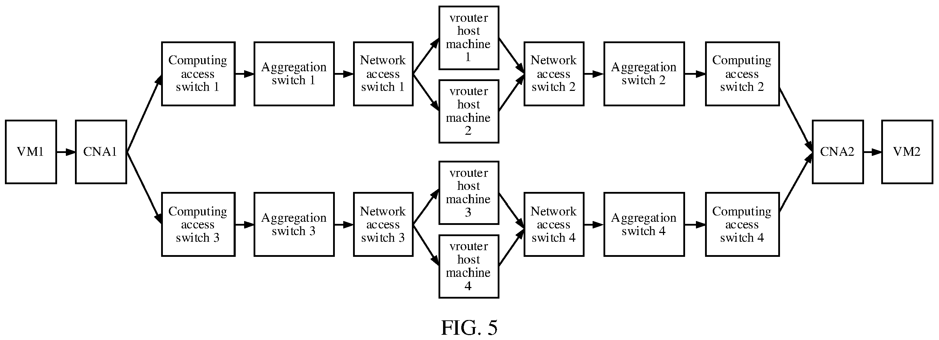

FIG. 5 is a diagram of the traffic path of the physical network according to this embodiment of this application. In an example shown in FIG. 5, the complete traffic path of the physical network is generated based on the mirrored packet reported by each path node. The traffic path of the physical network is, for example, "VM1→CNA1→computing access switch 1→aggregation switch 1→network access switch 1→vrouter host machine 1→network access switch 2→aggregation switch 2→computing access switch 2→CNA2→VM2".

In the example shown in FIG. 5, there may be a plurality of traffic paths of the physical network, for example, "VM1→CNA1→computing access switch 3→aggregation switch 3→network access switch 3→vrouter host machine 3-network access switch 3-aggregation switch 3→computing access switch 3→CNA2→VM2".

203: The cloud server displays the dialing test result of the path node in the transmission path on the management window.

The cloud server displays the dialing test result of the path node in the transmission path on the management window. The transmission path includes the control plane path, the virtual network path, and the physical network path. The dialing test result includes a packet loss rate and a delay of one or more path nodes in the transmission path.

In a possible implementation, the cloud server prompts a fault location based on the network path. Specifically, when the dialing test result indicates that a network link is faulty, the cloud server marks an abnormal dialing test result in the network path on the management window, and marks a location of the abnormal dialing test result in the network path.

In a possible implementation, the cloud server generates a network fault diagnosis result and a network troubleshooting suggestion based on the dialing test result, and displays the network fault diagnosis result and the network troubleshooting suggestion on the management window, where the network troubleshooting suggestion provides at least one troubleshooting suggestion.

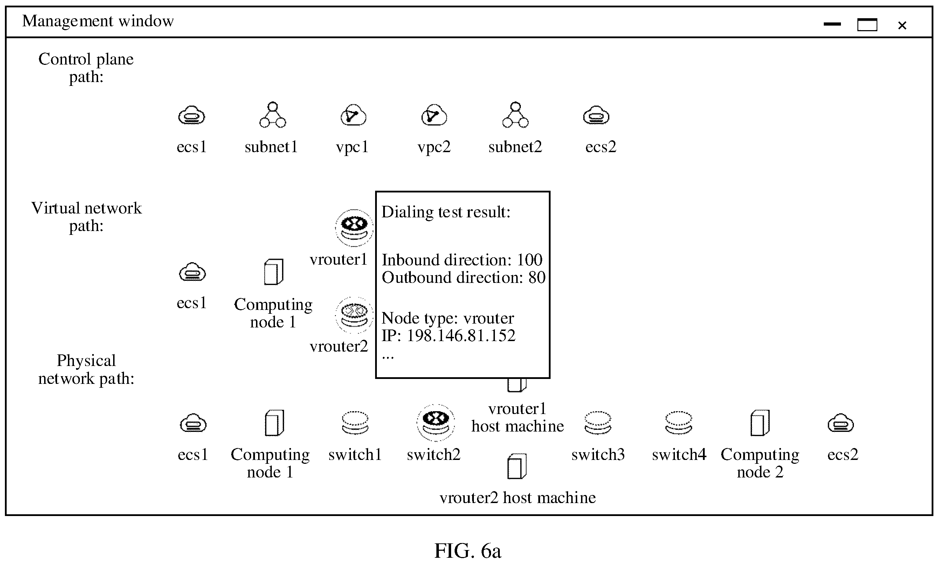

FIG. 6a is a diagram of the dialing test result of the path node according to this embodiment of this application. In an example shown in FIG. 6a, a management window displays the dialing test result of the path node in the three-layer transmission path, and three layers include the control plane transmission path, the virtual network path, and the physical network path.

In the example shown in FIG. 6a, for example, the user clicks a "vrouter" path node in the virtual network path on the management window, and the management window displays a dialing test result related to the "vrouter" path node. The dialing test result is, for example, that the management window displays a quantity of packets in an inbound direction of the "vrouter" path node being 100, and a quantity of packets in an outbound direction of the "vrouter" path node is 80. A packet loss rate of the path node may be calculated based on the quantity of packets in the inbound direction of the "vrouter" path node and the quantity of packets in the outbound direction.

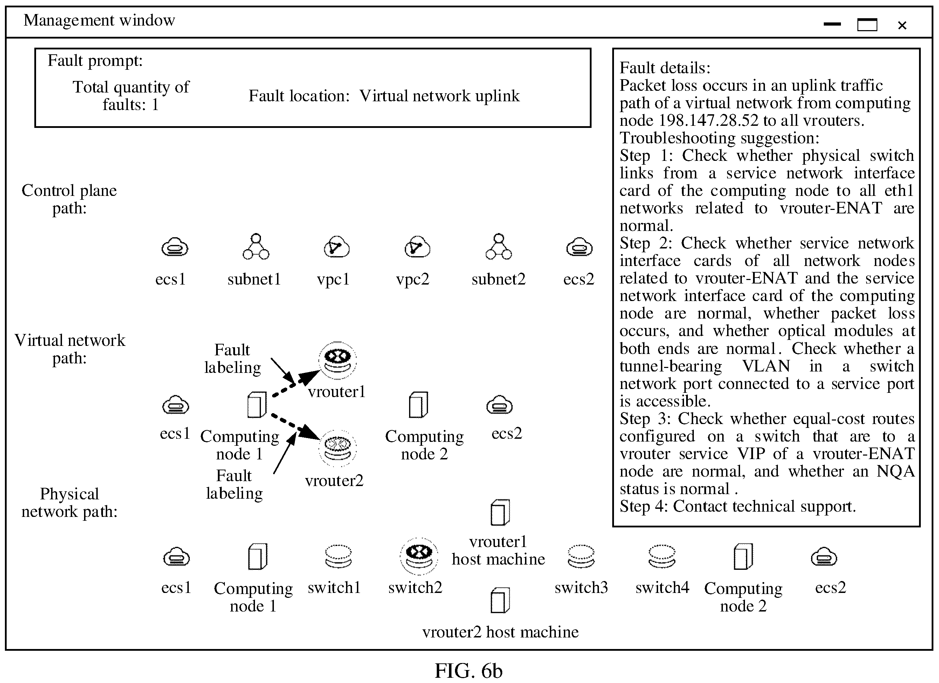

FIG. 6b is a diagram of a management window of the network fault diagnosis result according to this embodiment of this application. In an example shown in FIG. 6b, the management window displays a total quantity of faults and fault details in a three-layer network connection, where the fault details include a fault location and a troubleshooting suggestion.

In the example shown in FIG. 6a, for example, the total quantity of network link faults displayed on the management window is 1, and the fault occurs on a computing node 198.147.28.52 in an uplink traffic path of a virtual network. The troubleshooting suggestion is as follows: "Step 1: Check whether physical switch links from a service network interface card of the computing node to all eth1 networks related to vrouter-ENAT are normal. Step 2: Check whether service network interface cards of all network nodes related to vrouter-ENAT and the service network interface card of the computing node are normal, whether a packet loss occurs, and whether optical modules at both ends are normal. Check whether a tunnel-bearing VLAN in a switch network port connected to a service port is accessible. Step 3: Check whether equal-cost routes that are configured on a switch and that are to a vrouter service VIP of a vrouter-ENAT node are normal, and whether an NQA status is normal. Step 4: Contact technical support."

The foregoing describes the network link fault diagnosis method provided in this embodiment of this application. The following describes an apparatus provided in an embodiment of this application with reference to the accompanying drawings.

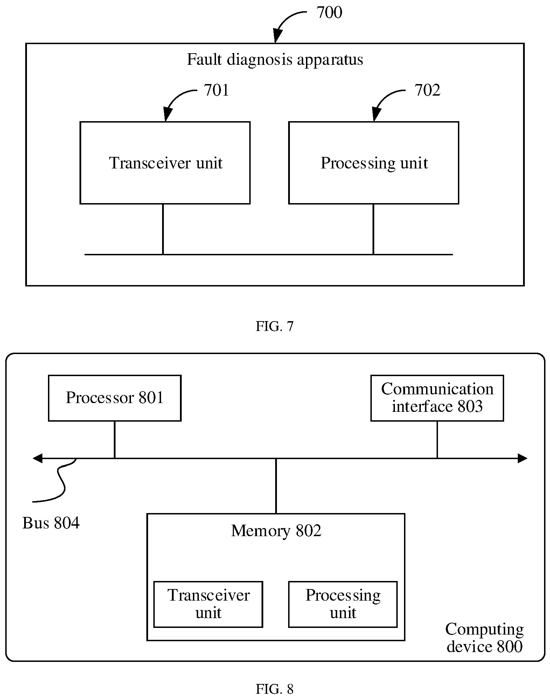

FIG. 7 is a diagram of a structure of a fault diagnosis apparatus according to an embodiment of this application. The apparatus is configured to implement the steps performed by the cloud server in the foregoing embodiment. As shown in FIG. 7, the fault diagnosis apparatus 700 includes a transceiver unit 701 and a processing unit 702.

The processing unit 702 is configured to generate a dialing test task based on dialing test information configured by a user, where the dialing test information includes a source internet protocol IP address and a destination IP address. The processing unit 702 is further configured to: run the dialing test task, and display a dialing test result, where the dialing test result includes at least one network path, the network path includes a device between a device corresponding to the source IP address and a device corresponding to the destination IP address, and the at least one network path includes at least one of the following: a virtual network path and a physical network path.

In a possible implementation, the dialing test information further includes one or more of the following: a source port, a destination port, and a transport protocol.

In a possible implementation, a mapping relationship exists between a device included in the virtual network path and a device included in the physical network path.

In a possible implementation, the processing unit 702 is further configured to prompt a fault location based on the network path.

In a possible implementation, the processing unit 702 is further configured to provide at least one troubleshooting suggestion.

In a possible implementation, the virtual network path includes a virtual device between the device corresponding to the source IP address and the device corresponding to the destination IP address, and the physical network path includes a physical device between the device corresponding to the source IP address and the device corresponding to the destination IP address.

In a possible implementation, the dialing test result further includes a packet loss rate or a delay of one or more devices.

In a possible implementation, the transceiver unit 701 is configured to obtain static resource information of a network link, where the static resource information includes one or more of the following information: a tenant virtual private cloud VPC, a subnet, a security group, a routing table, port information, an IP address, and load balancing information. The processing unit 702 is further configured to establish a control plane path of the network link based on the static resource information.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, the units may be processing elements that are separately disposed, or may be integrated into a chip of the apparatus for implementation. In addition, the units may alternatively be stored in a memory in a form of a program, and are invoked by a processing element of the apparatus to perform functions of the units. In addition, all or some of the units may be integrated, or may be implemented independently. The processing element herein may also be referred to as a processor, and may be an integrated circuit having a signal processing capability. During implementation, steps in the foregoing method or the foregoing units may be implemented by using a hardware integrated logic circuit in the processing element, or may be implemented in the form of software invoked by the processing element.

It should be noted that, for brief description, the foregoing method embodiments are represented as a series of actions. However, a person skilled in the art should know that this application is not limited to the described order of the actions. In addition, a person skilled in the art should also know that all embodiments described in this specification are example embodiments, and the related actions are not necessarily mandatory to this application.

Another appropriate step combination that can be figured out by a person skilled in the art based on the content described above also falls within the protection scope of this application. In addition, a person skilled in the art should also know that all embodiments described in this specification are example embodiments, and the related actions are not necessarily mandatory to this application.

FIG. 8 is a diagram of a structure of a computing device according to an embodiment of this application. As shown in FIG. 8, the computing device 800 includes a processor 801, a memory 802, a communication interface 803, and a bus 804. The processor 801, the memory 802, and the communication interface 803 are coupled through a bus (not marked in the figure). The memory 802 stores instructions. When execution instructions in the memory 802 are executed, the computing device 800 performs the method performed by the cloud server in the foregoing method embodiment.

The computing device 800 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of the integrated circuits. For another example, when the unit in the apparatus may be implemented in a form of scheduling a program by a processing element, the processing element may be a general-purpose processor, for example, a central processing unit (central processing unit, CPU) or another processor that can invoke the program. For another example, the units may be integrated and implemented in a form of a system-on-a-chip (system-on-a-chip, SoC).

The processor 801 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor or the like.

The memory 802 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 802 stores an executable program code, and the processor 801 executes the executable program code to separately implement functions of the foregoing transceiver unit and processing unit, so as to implement the foregoing method. In other words, the memory 802 stores instructions used to perform the foregoing method.

The communication interface 803 uses a transceiver module, for example, but not limited to, a network interface card or a transceiver, to implement communication between the computing device 800 and another device or a communication network.

In addition to a data bus, the bus 804 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like. Buses may be classified into an address bus, a data bus, a control bus, and the like.

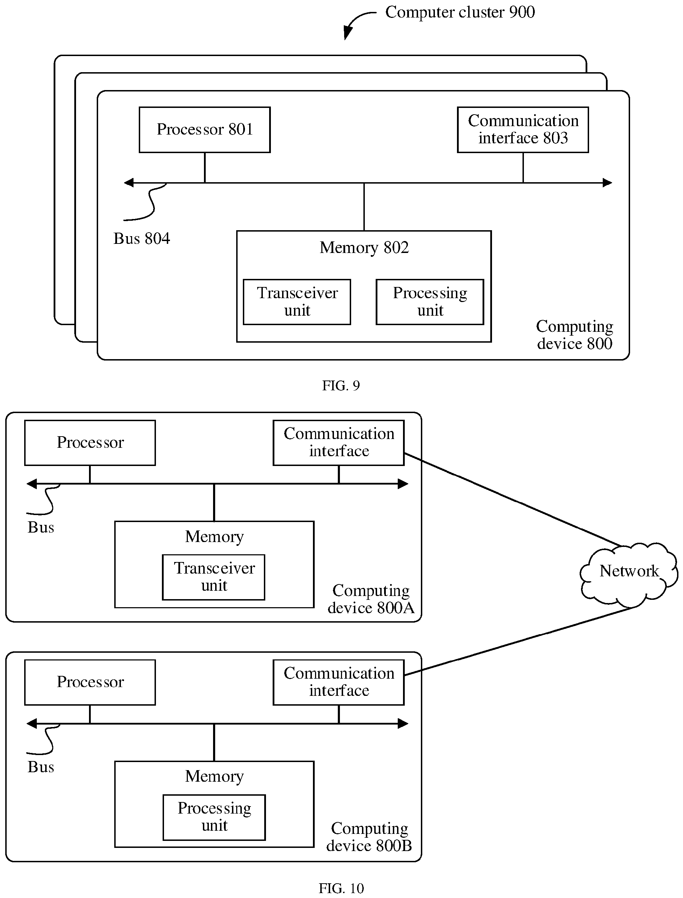

FIG. 9 is a diagram of a computing device cluster according to an embodiment of this application. As shown in FIG. 9, the computing device cluster 900 includes at least one computing device 800. The computing device 800 may be a server, for example, a central server, an edge server, or a local server in a local data center. In some embodiments, the computing device 800 may alternatively be a terminal device such as a desktop computer, a notebook computer, or a smartphone.

As shown in FIG. 9, the computing device cluster 900 includes at least one computing device 800. A memory 802 in one or more computing devices 800 in the computing device cluster 900 may store same instructions used to perform the foregoing fault diagnosis.

In some possible implementations, the memory 802 in the one or more computing devices 800 in the computing device cluster 900 may also store some instructions used to perform the foregoing fault diagnosis. In other words, a combination of the one or more computing devices 800 may jointly execute the instructions used to perform the foregoing fault diagnosis.

It should be noted that memories 802 in different computing devices 800 in the computing device cluster 900 may store different instructions, which are respectively used to perform some functions of the foregoing apparatus. In other words, instructions stored in the memories 802 in different computing devices 800 may implement functions of one or more modules of the transceiver module and the processing module.

In some possible implementations, the one or more computing devices 800 in the computing device cluster 900 may be connected through a network. The network may be a wide area network, a local area network, or the like.

FIG. 10 is a diagram in which computer devices in a computer cluster are connected through a network according to an embodiment of this application. As shown in FIG. 10, two computing devices 800A and 800B are connected through the network. Specifically, each computing device is connected to the network through a communication interface of the computing device.

In a possible implementation, a memory in the computing device 800A stores instructions for performing a function of a transceiver module. In addition, a memory in the computing device 800B stores instructions for performing a function of a processing module.

It should be understood that functions of the computing device 800A shown in FIG. 10 may alternatively be completed by a plurality of computing devices. Similarly, functions of the computing device 800B may alternatively be completed by a plurality of computing devices as well.

In another embodiment of this application, a computer-readable storage medium is further provided. The computer-readable storage medium stores computer-executable instructions. When a processor of a device executes the computer-executable instructions, the device performs the method performed by the cloud server in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the cloud server in the foregoing method embodiment.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the foregoing described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A network link fault diagnosis method, comprising:
generating a dialing test task based on dialing test information configured by a user, wherein the dialing test information comprises a source internet protocol IP address and a destination IP address; and
running the dialing test task, and displaying a dialing test result, wherein the dialing test result comprises at least one network path, the network path comprises a device between a device corresponding to the source IP address and a device corresponding to the destination IP address, and the at least one network path comprises at least one of the following: a virtual network path or a physical network path.

2. The method according to claim 1, wherein the dialing test information further comprises one or more of the following: a source port, a destination port, and a transport protocol.

3. The method according to claim 1 or 2, wherein a mapping relationship exists between a device comprised in the virtual network path and a device comprised in the physical network path.

4. The method according to any one of claims 1 to 3, wherein the method further comprises:
prompting a fault location based on the network path.

5. The method according to claim 4, wherein the method further comprises:
providing at least one troubleshooting suggestion.

6. The method according to any one of claims 1 to 5, wherein the virtual network path comprises a virtual device between the device corresponding to the source IP address and the device corresponding to the destination IP address, and the physical network path comprises a physical device between the device corresponding to the source IP address and the device corresponding to the destination IP address.

7. The method according to any one of claims 1 to 6, wherein the dialing test result further comprises a packet loss rate or a delay of one or more devices.

8. The method according to any one of claims 1 to 7, wherein the method further comprises:
obtaining static resource information of a network link, wherein the static resource information comprises one or more of the following information: a tenant virtual private cloud VPC, a subnet, a security group, a routing table, port information, an IP address, and load balancing information; and
establishing a control plane path of the network link based on the static resource information.

9. A network link fault diagnosis apparatus, comprising a transceiver unit and a processing unit, wherein
the processing unit is configured to generate a dialing test task based on dialing test information configured by a user, wherein the dialing test information comprises a source internet protocol IP address and a destination IP address; and
the processing unit is further configured to: run the dialing test task, and display a dialing test result, wherein the dialing test result comprises at least one network path, the network path comprises a device between a device corresponding to the source IP address and a device corresponding to the destination IP address, and the at least one network path comprises at least one of the following: a virtual network path and a physical network path.

10. The apparatus according to claim 9, wherein the dialing test information further comprises one or more of the following: a source port, a destination port, and a transport protocol.

11. The apparatus according to claim 9 or 10, wherein a mapping relationship exists between a device comprised in the virtual network path and a device comprised in the physical network path.

12. The apparatus according to any one of claims 9 to 11, wherein the processing unit is further configured to:
prompt a fault location based on the network path.

13. The apparatus according to claim 12, wherein the processing unit is further configured to:
provide at least one troubleshooting suggestion.

14. The apparatus according to any one of claims 9 to 13, wherein the virtual network path comprises a virtual device between the device corresponding to the source IP address and the device corresponding to the destination IP address, and the physical network path comprises a physical device between the device corresponding to the source IP address and the device corresponding to the destination IP address.

15. The apparatus according to any one of claims 9 to 14, wherein the dialing test result further comprises a packet loss rate or a delay of one or more devices.

16. The apparatus according to any one of claims 9 to 15, wherein the transceiver unit is configured to obtain static resource information of a network link, wherein the static resource information comprises one or more of the following information: a tenant virtual private cloud VPC, a subnet, a security group, a routing table, port information, an IP address, and load balancing information, and
the processing unit is further configured to establish a control plane path of the network link based on the static resource information.

17. A computer device cluster, comprising at least one computing device, wherein each computing device comprises a processor, and the processor of the at least one computing device is configured to execute instructions stored in a memory of the at least one computing device, so that the computing device cluster performs the method according to any one of claims 1 to 8.

18. A computer-readable storage medium, wherein the computer-readable storage medium stores instructions, and when the instructions are executed, a computer is enabled to perform the method according to any one of claims 1 to 8.

19. A computer program product, wherein the computer program product comprises instructions, and when the instructions are executed, a computer is enabled to implement the method according to any one of claims 1 to 8.
